(19) Europäisches Patentamt
European Patent Office
Office européen des brevets

(11) **EP 2 015 256 A1**

(12) **EUROPEAN PATENT APPLICATION**
published in accordance with Art. 153(4) EPC

(43) Date of publication:
**14.01.2009 Bulletin 2009/03**

(51) Int Cl.:
***G06T 15/00*** (2006.01)

(21) Application number: **07742274.9**

(22) Date of filing: **24.04.2007**

(86) International application number:
**PCT/JP2007/058839**

(87) International publication number:
**WO 2007/125912 (08.11.2007 Gazette 2007/45)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **24.04.2006 JP 2006118915**

(71) Applicant: **Panasonic Corporation**
**Kadoma-shi**
**Osaka 571-8501 (JP)**

(72) Inventors:
• **SHIMASAKI, Takamasa**
**2-1-61 Shiromi, Chuo-ku, Osaka 540-6207 (JP)**
• **FUKAMI, Yukiyasu**
**2-1-61 Shiromi, Chuo-ku, Osaka 540-6207 (JP)**
• **SIRAI, Yasuhisa**
**2-1-61 Shiromi, Chuo-ku, Osaka 540-6207 (JP)**

(74) Representative: **Ehlers, Jochen et al**
**Eisenführ, Speiser & Partner**
**Patentanwälte Rechtsanwälte**
**Postfach 10 60 78**
**28060 Bremen (DE)**

(54) **DRAWING DEVICE, AND DRAWING METHOD**

(57) A device that is not necessarily high in performance, includes: a standard information obtaining unit configured to obtain standard information including a type of drawing process that could be used for computer graphics and a feature of the shape of polygon; a drawing information obtaining unit configured to obtain drawing information including information indicating the type of drawing process used for the actual computer graphics and information indicating the shape of polygon; a simplification judging unit configured to judge whether the type of the drawing process and the shape of the polygon indicated by the drawing information satisfy the standard indicated by the drawing standard information; a polygon simplifying unit configured to simplify the polygon by reducing vertices composing the polygon when said simplification judging unit judges that the standard is satisfied; and a drawing unit configured to execute computer graphics process using the polygon whose vertices are reduced, in order to achieve simplification of polygons and reduction of the total processing time for computer graphics (CG).

FIG. 3

## Description

## Technical Field

The present invention relates to computer graphics on computers, information devices, mobile phones and gaming machines, and particularly relates to an approximation technique for curved surface and curved lines.

## Background Art

In three-dimensional computer graphics, three-dimensional curved surfaces are drawn by approximating the curved surfaces with polygons.

Since drawing using polygons requires enormous amount of processing time, a conventional technique for simplifying the drawing process by reducing the number of vertices of polygon has been proposed (see Patent Reference 1, for example).

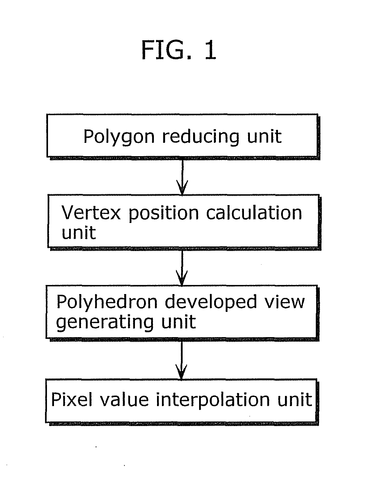

FIG. 1 is a block diagram of the conventional textured data generating device. The conventional textured data generating device reduces the number of polygons by a polygon reducing unit 1. The vertex position calculating unit 2 calculates a corresponding position of the vertices deleted by the polygon reducing unit 1 in a new triangle patch, and stores the brightness value in the deleted vertex. The polyhedron developed view generating unit 3 generates a developed view of the polygon in a two-dimensional image area. Here, the brightness value of each grid point in the image area is calculated by the pixel value interpolating unit 4.

[Patent Reference 1] Japanese Unexamined Patent Application Publication No. 7-160898

There is a problem, however, that the processing time as the total drawing time is not reduced with the conventional method of deleting the vertices of polygons since the process of deleting the vertices of polygon takes time.

In other words, when deletion of vertices of polygon is not effective (more specifically, when the vertices are not deleted since the deletion of vertices greatly changes the form and causes uncomfortable feeling to a viewer), more processing time, as much as the time for deletion, is necessary, and more time is needed for the whole drawing time.

In recent years, demands for displaying three-dimensional objects moving at a speed fast enough for not causing uncomfortable feeling in devices such as mobile phones and portable gaming console which are not necessarily high in performance has been rising. The conventional polygon vertex deleting method is not sufficient for fulfilling the demand.

Thus, it is an object of the present invention to provide a drawing device that simplify polygons and can reduce the total processing time for computer graphics, even when incorporated in a device without high processing capability.

## Disclosure of Invention

The present invention is conceived in order to solve the abovementioned problem, and includes the following configuration.

A drawing device according to the present invention includes: a standard information obtaining unit which obtains standard information including a type of drawing process that could be used for computer graphics and a feature of the shape of polygon; a drawing information obtaining unit which obtains drawing information including information indicating the type of drawing process used for the actual computer graphics and information indicating the shape of polygon; a simplification judging unit which judges whether the type of the drawing process and the shape of the polygon indicated by the drawing information satisfy the standard indicated by the standard information; a polygon simplifying unit which simplifies the polygon by reducing vertices composing the polygon when the simplification judging unit judges that the standard is satisfied; and a drawing unit which executes computer graphics process using the polygon whose vertices are reduced.

With this configuration, it is possible to provide a drawing device which can simplify polygon data after judging or assessing whether the process is accelerated as a whole, and can perform drawing of a three-dimensional object using polygon approximation at high speed without a CPU that is high in computing capacity.

In addition, the content of drawing process that could be used for computer graphics includes at least one of assigning color to vertex, lighting, hidden surface removal, alpha blending, and texture mapping.

With this configuration, it is possible to simplify polygon data after judging or assessing whether the process is accelerated as a whole with specific content of drawing process into consideration.

In addition, the standard information includes a condition that the length of perpendicular from one of the vertices composing the polygon to a line segment connecting other two vertices of the polygon is shorter than a predetermined threshold.

This configuration allows simplification of polygon data after judging and assessing whether the whole process is accelerated in consideration of the effect to coordinate values of vertices that are important component of a polygon and the shape of polygon.

In addition, each of the vertices composing the polygon includes at least one of position coordinate data, color data, texture coordinate data, and normal line vector data as attribute data, and the polygon simplifying unit is which calculates a maximum value of the distance to the line segment that has been taken out with respect to all attribute data that is included and to delete a vertex between the line segment that has been taken out when the calculated maximum value is not larger than the predetermined threshold regarding all attribute data.

This configuration allows simplification of polygon data after judging and assessing whether the whole process is accelerated in consideration of the effect, not only to coordinate values of vertices that are important component of a polygon and the shape of polygon, but also to color, texture, and normal line direction.

In addition, the drawing method according to the present invention includes: obtaining standard information including a type of drawing process that could be used for computer graphics and a feature of the shape of polygon; obtaining drawing information including information indicating the type of drawing process used for the actual computer graphics and information indicating the shape of polygon; judging whether the type of the drawing process and the shape of the polygon indicated by the drawing information satisfy the standard indicated by the standard information; simplifying the polygon by reducing vertices composing the polygon when the judging judges that the standard is satisfied; and executing computer graphics process using the polygon whose vertices are reduced.

With this configuration, it is possible to simplify polygon data after judging or assessing whether the process is accelerated as a whole, and can perform drawing of a three-dimensional object using polygon approximation at high speed in a device that is not necessarily high in computing capacity.

In addition, the simplifying includes: (1) extracting vertices composing one surface from given polygon data; (2) storing, in a memory, line segments connecting a starting point and a end point of the vertices composing the one surface; (3) judging whether there is a segment stored in the memory and takes one line segment when it is judged that the line segment is stored in the memory; (4) calculating a maximum value of distances from the respective vertices between the line segment that has been taken out to the line segment that has been taken out; (5) deleting each vertex between the line segment that has been taken out when the maximum value is not larger than the predetermined threshold; (6) storing, in the memory, two line segments connecting a vertex having a maximum distance and both of end points of the line segment that has been taken out, and (7) repeating the process from (3) to (6) until no line segment is stored in the memory.

This configuration allows simplification of polygon data after judging and assessing whether the whole process is accelerated after high-speed evaluation of the effect to coordinate values of vertices that are important component of a polygon and the shape of polygon with a specific algorithm.

Note that the present invention may be realized as an integrated circuit including characteristic component of the drawing device, or may be realized as a program causing a computer to execute each step included in the drawing method. It is needless to say that the program may be widely distributed via a recording medium such as DVD and transmission medium such as the Internet.

With this configuration, it is possible to simplify polygon data after judging or assessing whether the process is accelerated as a whole, and can perform drawing of a three-dimensional object using polygon approximation at high speed in a device that is not necessarily high in computing capacity, which enables display of moving images without causing uncomfortable feeling to a user.

**Brief Description of Drawings**

FIG. 1 is a diagram for describing a method for approximating a curved line in a conventional curved line approximating device.

FIG. 2 is a schematic diagram showing the configuration of the drawing device according to the present invention.

FIG. 3 is a block diagram showing functional configuration of the control unit of the drawing device according to the first embodiment.

FIG. 4 is a chart showing an example of the simplification standard table according to the present invention.

FIG. 5 (a) to (d) is a diagram for describing an example of polygon reduction process according to the first embodiment.

FIG. 6 (a) to (d) is a diagram for describing another example of polygon reduction process according to the first embodiment.

FIG. 7 (a) shows an example of a polygon inputted via the drawing information obtaining unit. FIG. 7 (b) is a chart showing detailed attributes of polygon.

FIG. 8 (a) to (f) describes a process of polygon simplification according to the first embodiment focusing on the color of each vertex of polygon.

FIG. 9 shows an example of polygon after simplification.

FIG. 10 is a flowchart showing process flow of judgment on reduction of vertices composing polygon data according to the first embodiment.

FIG. 11 is a flowchart showing process flow of reducing polygons according to the first embodiment.

FIG. 12 is a flowchart showing the detail of "side-vertex distance calculation" in FIG. 11 focusing on the coordinate value.

FIG. 13 is a flowchart showing the detail of "side-vertex distance calculation" in FIG. 11 focusing on the color value.

FIG. 14 shows two formats for defining polygons according to the second embodiment.

FIG. 15 is a figure showing an outline of the conversion from a STRIP-type polygon to a FAN-type polygon.

FIG. 16 is a flowchart showing process of the conversion from the STRIP-type polygon to the FAN-type polygon in the drawing information obtaining unit according to the second embodiment.

100 Drawing device

102 Control unit

103 RAM

104 ROM

105 Display unit

106 Operating unit

107 Communication unit

108 Internal bus

110 Drawing information obtaining unit

120 Drawing type determination unit

130 Threshold determination unit

140 Initial segment determination unit

150 Simplification judging unit

160 Polygon simplifying unit

## Best Mode for Carrying Out the Invention

The embodiments according to the present invention are described hereafter with reference to the drawing. Although only some exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

(First embodiment)

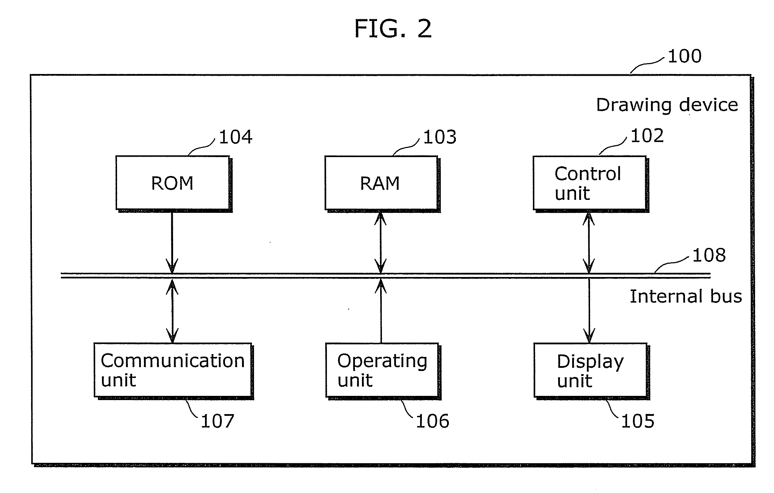

FIG. 2 is a schematic diagram showing the configuration of the drawing device 100 according to the first embodiment. The drawing device 100 according to the first embodiment simplifies polygons based on attributes in each vertex in a polygon, a three-dimensional position coordinate value, a color value attached to the vertex, a texture coordinate data, or a normal vector. The drawing method described herein is used in the drawing device 100. However, the drawing device 100 is a specific example for describing the drawing device according to the present invention. Thus, the drawing device may not be limited to the drawing device 100, and may also be other electronic devices such as mobile phones and personal computers.

As shown in FIG. 2, the drawing device 100 includes the control unit 102, the RAM 103, the ROM 104, the display unit 105, the operating unit 106 and the communication unit 107 as the major components. Note that although the drawing device 100 may also include components such as the power source and the package in addition to the above components, descriptions for these components are omitted since they are not directly related to the present invention.

The main components are connected via the internal bus 108, and exchanges data as necessary.

The control unit 102 is a computer such as a microcomputer, and controls the operations of the units in the drawing device 100. Note that the control unit 102 is not necessarily independent, and may be a core of microcomputer included in a system LSI. The control unit 102 may not necessarily be a universal microcomputer, and may be specialized for a particular use or purpose.

The RAM 103 is a readable and writable semiconductor memory such as Dynamic-RAM (DRAM) and may be fixed or detachable like an SD memory card. Furthermore, the RAM 103 stores various types of data (including programs) temporarily or for a long term as necessary. In addition, the RAM 103 may be the type in which the recorded content is lost when the power is off, or the type in which the recorded content is not lost when the power is off, or may include both.

The ROM 104 is a read-only memory, and stores various types of programs, data that is not changed, or could interfere the operations when changed (including device ID numbers and others). In addition, other than semiconductor memory, the ROM 104 may use a magnetic recording method or an optical recording method, or both of them.

The program according to an embodiment of the present invention is recorded in one of the RAM 103 and the ROM 104 or both and is executed by the control unit 102, and a program that enables execution of the drawing method according to the present invention is recorded in one of the RAM 103 and the ROM 104 or both.

The display unit 105 is, for example, a liquid crystal display panel or an EL display panel, and can visibly display images, characters, or signs and others.

The operating unit 106 has a function for inputting various types of information with a push button, a key switch, a touch panel, a pointing device, or an arrow key.

The communication unit 107 is for communication using wireless LAN, wired LAN, visible light or infrared light, communication with a public network or dedicated network and other communications to exchange data with other devices, and may take any form.

A user can play a game in the drawing device 100 of the first embodiment according to a program stored in the ROM 104 and the RAM 103. The user performs operations for the game at the operating unit 106, and the images of game are displayed on the display unit 105. The data which is to be the source of the gaming image is either given from the data stored in the ROM 104 or the RAM 103, or given as polygon data after calculation based on the data stored in the ROM 104 and the RAM 103. Then, based on the polygon data, image processing necessary for the type of game or scene, including assigning color to vertex, lighting, alpha blending, hidden surface removal, and texture mapping is performed, and an image generated as a result is displayed on the display unit 105.

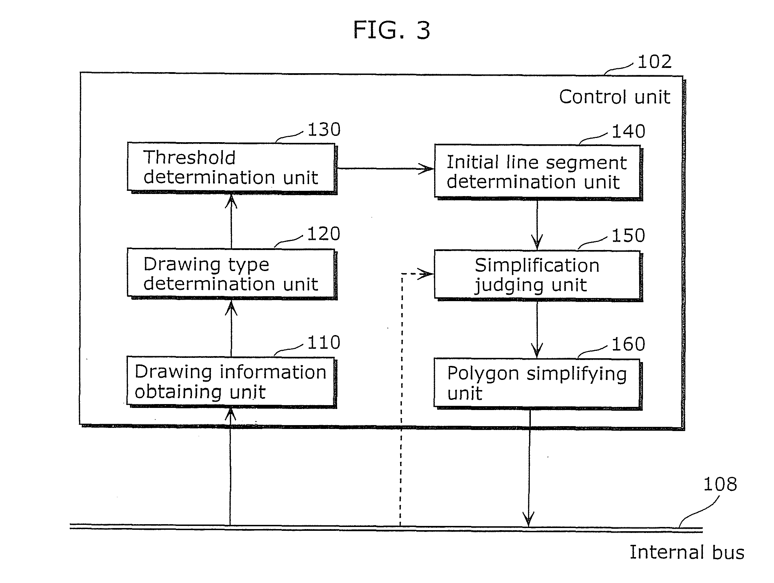

FIG. 3 is a block diagram showing the configuration of the control unit 102 in the drawing device 100 according to the first embodiment. As shown in FIG. 3, the control unit 102 includes the drawing information obtaining unit 110, the drawing type determination unit 120, the threshold determination unit 130, the initial segment determination unit 140, the simplification judging unit 150 and the polygon simplifying unit 160.

The drawing information obtaining unit 110 obtains polygon data and various types of parameters via the internal bus 108. Here, the polygon data is polygon data defined as the FAN type. The "FAN type" denotes a type of polygons, with the vertices that composes the polygon data defined clockwise in a closed loop.

The drawing type determination unit 120 determines the type of drawing to be executed based on the obtained polygon data. The types of drawing includes assigning color to vertex, lighting, alpha blending, hidden surface removal, texture mapping and others, and the type of drawing is uniquely determined based on the obtained polygon data or the type of game in execution or is determined according to the scenes in the game or the details of the operation. Furthermore, the drawing type determination unit 120 determines the size of space (hereinafter referred to as "the size of space") where the polygon represented by the obtained polygon data exists (more specifically, the maximum range of the predetermined space when displaying the polygon). The size of space is determined based on, in addition to the three-dimensional position coordinate value (X, Y, Z) which is the typical attribute in each vertex included in a polygon, the color values attached to the vertices (R, G, B), the texture coordinate data (TX, TY), normal line vectors (NX, NY, NZ) and others as necessary. The size of space is used to normalize the various relevant data to a relative value with respect to the size of space without using the data as an absolute value, for judging the reduction of the polygon data which is to be described later.

The following describes reasons for normalizing data with respect to the three-dimensional coordinate system and the color value (hereinafter also referred to as the color coordinate system).

The size of space in the three-dimensional coordinate system basically corresponds to the position coordinates corresponding to the whole display. The size of display remains the same. Thus, when the size of space is large, a large polygon on the coordinate system appears small, which makes it difficult to see the effect of reducing a few vertices of polygons. Polygons are evaluated based on the distance normalized by the size of space, not on the plain distance in the present invention since emphasis is placed on the appearance to the user upon evaluation.

The size of space in the color coordinate system corresponds to the range of the available width of color. Thus, when the size of space is small and not so many colors are available, deleting one vertex largely changes the appearance. On the other hand, when the size of space is large, even if deletion of vertex changes colors somewhat, the appearance does not change much. Polygons are evaluated based on the difference normalized by the size of color space, not on the plain difference of colors among vertices in the present invention since emphasis is placed on the appearance to the user upon evaluation.

Normalization is performed for the same reason when using texture coordinate data and normal line vectors.

The threshold determination unit 130 determines threshold used for judging the necessity of simplification of the obtained polygon data. The threshold is determined based on, in addition to the three-dimensional position coordinate value (X, Y, Z) which is the typical attribute in each vertex, the color value attached to each vertex (R, G, B), the textured coordinate data (TX, TY), normal line vectors (NX, NY, NZ) and others as necessary. The threshold corresponds to the length of perpendicular of the line segment connecting a vertex to a line segment connecting other two vertices (the detail will be described in the algorithm for reducing the polygons). Furthermore, the threshold needs to be determined based on the size of space. The normalized value of threshold is used for judging whether the vertices composing a polygon are reduced, which is to be described later.

The initial segment determination unit 140 determines the length of initial line segment of each polygon based on the obtained polygon data. The "length of initial line segment" is the length of the line segment connecting the starting point and the end point of a polygon. The length of initial segment affects the judgment of whether to perform deletion of the polygon data. The length of initial line segment is determined based on, in addition to the three-dimensional position coordinate value (X, Y, Z) which is the typical attribute in each vertex, the color value attached to each vertex (R, G, B), the textured coordinate data (TX, TY), normal line vectors (NX, NY, NZ) and others as necessary: Furthermore, the length of initial line segment needs to be determined based on the size of space. The normalized value using the size of space is used in an algorithm for reducing (more specifically, reducing the vertices of polygon) a polygon, which is to be described later. The length initial line segment in the given polygon is relativized through division by the determined size of space, and the normalized value is calculated. As will be described later, the normalized value is used in the algorithm for reducing polygons. The normalization is calculated based on, in addition to the three-dimensional position coordinate value (X, Y, Z) which is the typical attribute in each vertex, the color value attached to each vertex (R, G, B), the textured coordinate data (TX, TY), normal line vectors (NX, NY, NZ) and others as necessary.

The simplification judging unit 150 judges whether the result obtained by the process applies to the conditions shown in a simplification standard chart which is defined in advance (more specifically, whether to simplify the polygons or not), and notifies the polygon simplifying unit 160 of the judgment result. The data of the content of the simplification standard chart may be recorded in the storage unit (not shown) in the simplification judging unit 150, or in the RAM 103 or the ROM 104.

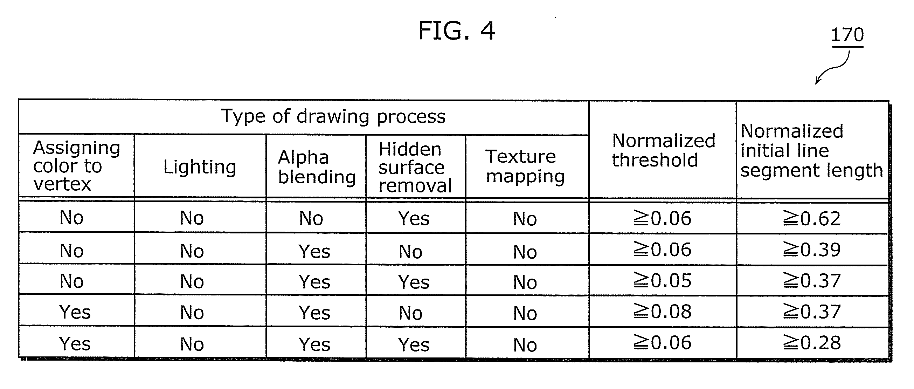

FIG. 4 is an example of the simplification standard table 170 used for judging at the simplification judging unit 150. The simplification standard table 170 is a chart of empirically obtained conditions to reduce the total process time necessary for graphics. "Assigning color to vertex" in the simplification standard table 170 refers to interpolation of colors in each surface when colors are assigned to vertices of polygon. "Lighting" refers to the process regarding the light source and reflection of light from the light source. "Alpha blending" refers to a process of synthesizing two images using a coefficient (alpha value). "Hidden surface removal" refers to process for removing the surfaces that are hidden when seen from a specific perspective. "Textured mapping" refers to a process of attaching images for depicting the texture of surface of object. "Normalized threshold" in the simplification standard table 170 is a normalized standard value with regard to the line segment when reducing the vertices of polygon (for example, normalization is performed using the screen size). "Normalized initial line segment length" refers to a normalized standard value with regard to a standard side of the polygon when reducing the vertices of polygon.

The simplification standard table in FIG. 4 shows the following 5 conditions.

(1) Drawing process involves only hidden surface removal, the normalized threshold value is 0.06 or more, and the normalized initial line segment length is 0.62 or more.
(2) Drawing process involves only alpha blending, the normalized threshold value is 0.06 or more, and the normalized initial line segment length is 0.39 or more.
(3) Drawing process involves only alpha blending and hidden surface removal, the normalized threshold value is 0.05 or more, and the normalized initial line segment length is 0.37 or more.
(4) Drawing process involves only assigning color to vertex and alpha blending, the normalized threshold value is 0.08 or more, and the normalized initial line segment length is 0.37 or more.
(5) Drawing process involves only assigning color to vertex, alpha blending, and hidden surface removal, the normalized threshold value is 0.06 or more, and the normalized initial line segment length is 0.28 or more.

The conditions for the normalized threshold and the normalized initial line segment length needs to be satisfied at least with respect to one type of data for evaluation among the three-dimensional location coordinate value (X, Y, Z) which is the typical attribute in each vertex, the color value attached to each vertex (R, G, B), the textured coordinate data (TX, TY), normal line vectors (NX, NY, NZ) Furthermore, a combination of these conditions may also be satisfied.

The polygon simplifying unit 160 simplifies polygons based on the three-dimensional position coordinate and color value attached to each vertex, when the simplification judging unit 150 judges that "simplification of polygons should be performed". For example, this is applied to a case where deleting a vertex of a hexagon to generate a pentagon. Furthermore, the polygon simplifying unit 160 includes a stack that temporarily stores data when simplifying the polygon. Here, the "stack" refers to a last-in first-out push-pull (up-down) stack; however, the last-in first-out stack is merely an example. The stack may also be a memory such as a first-in first-out shift register, or a random access memory (RAM) in which the writing order and the reading order are not necessarily specified.

The drawing device 100 needs to display moving images or virtual moving images in real time in order to ensure the realistic impression. Furthermore, a CPU used for the drawing device 100 is not necessarily high in performance due to limitation in manufacturing cost and power consumption. The images to be displayed may be complex depending on the content or scene of game.

As described above, even when drawing is performed using a CPU which is not necessarily high in performance, in order to display complex moving images or virtual moving images in real time, the drawing device 100 first judges whether the total process amount is reduced by reducing the polygons, and when the result shows that the total process amount can be reduced with polygon reduction, the drawing device 100 reduces the polygons using the algorithm which is described later to reduce the total process amount, and displays the complex moving images or virtual moving images in real time.

More specifically, in the drawing device 100 according to the present invention, when polygon data to be drawn is given to the display unit 105, the control unit 102 judges whether drawing after the deletion of polygon data according to the program recorded on the RAM 103 or the ROM 104 accelerates the process as a whole, or drawing without deleting the polygon data accelerates the process as a whole.

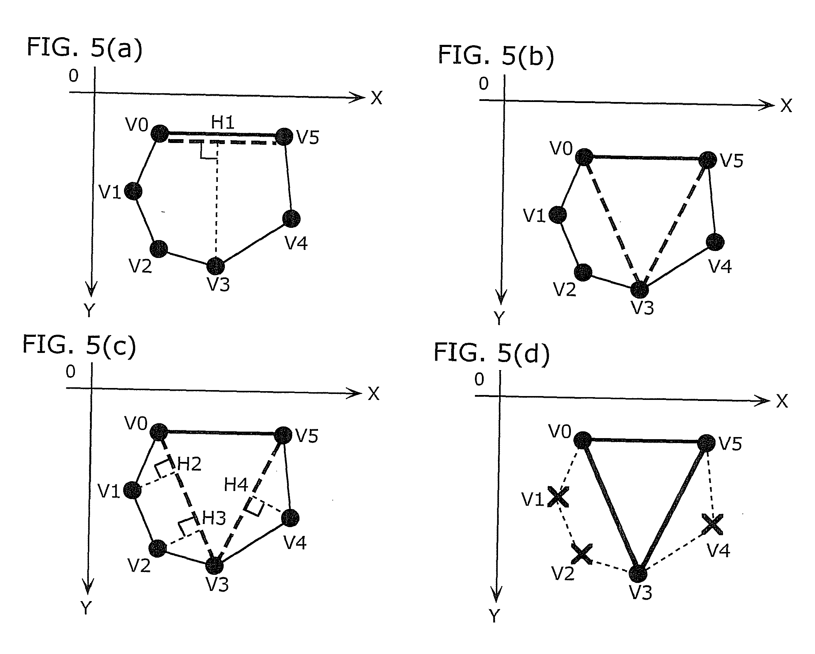

Next, operations of the drawing device 100 according to the first embodiment are described in reference to FIGS. 5 to 13. In the following description, an embodiment in which it is judged whether the polygon is simplified or not, and polygons are simplified based on the three-dimensional position coordinate of the polygon as a typical example of polygon simplification. Furthermore, an embodiment in which polygons are simplified based on the color values assigned to each vertex of polygons is described as another example of polygon simplification. As described above, simplification may also be performed based on the textured coordinate data or normal line vectors, however, descriptions for these processes are omitted here since basic process flow is the same.

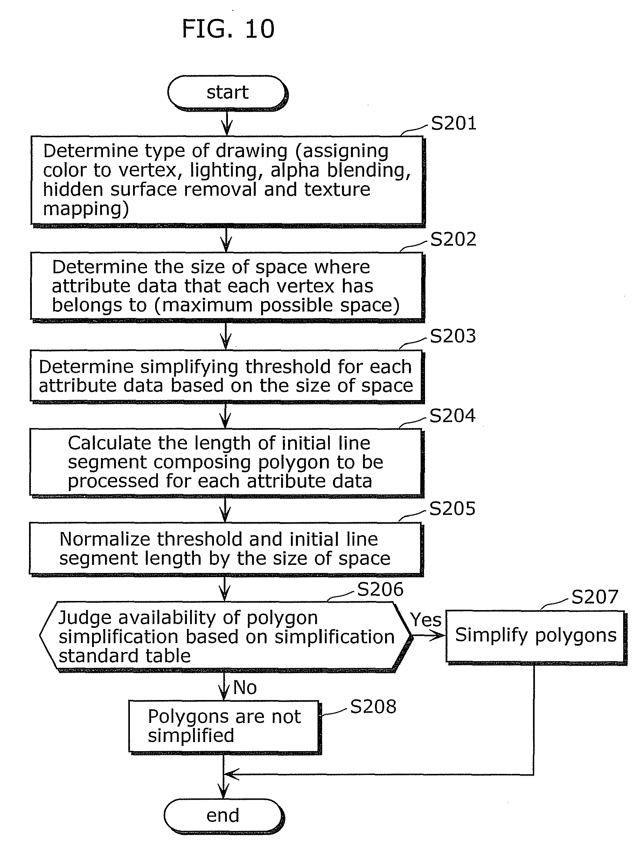

FIG. 10 is a flowchart showing the process flow of judging whether to simplify the polygons or not.

First, the drawing type determination unit 120 determines the type of drawing process applied to the polygon to be drawn based on the polygon data and others obtained by the drawing information obtaining unit 110 (S201).

Furthermore, the drawing type determination unit 120 determines the size of space regarding display of the polygons (S202).

Next, the threshold determination unit 130 determines a threshold used for simplifying polygons to be processed (S203).

Subsequently, the initial line segment determination unit 140 calculates the length of initial line segment of the polygons to be processed (S204).

The threshold for simplifying the polygon data and the obtained initial line segment length of the polygon are relativized through division by the determined size of space and the normalized value is calculated (S205).

Finally, matching or non-matching of the result is checked referring to the simplification standard table shown in FIG. 4 (S206), and the simplification judging unit 150 judges that polygons are simplified when there is matching (S207), and polygons are not simplified when there is no matching (S208).

As described above, it is judged whether the given polygon data satisfies the predetermined conditions before processing of polygon, and reduces the polygons only when the conditions are satisfied. This avoids the case where reducing polygons takes time and does not contribute to accelerating the process as a whole.

The following is the description of an algorithm used in the simplification judging unit 150 for reducing vertices of polygon, and the algorithm is executed when it is determined that "polygons should be simplified".

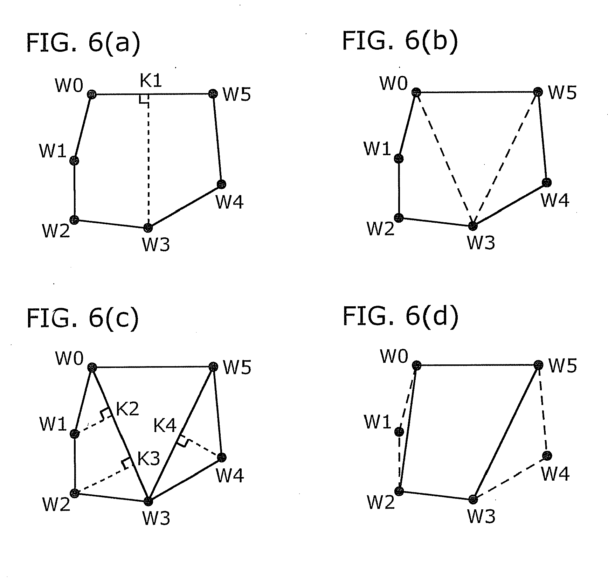

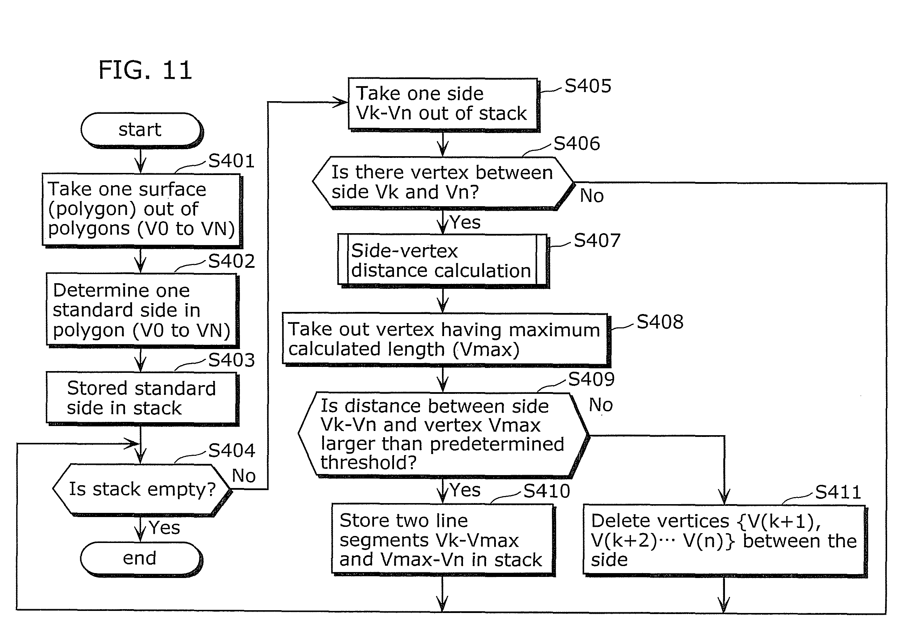

FIG. 5 (a) to (d) is a chart showing an example of polygons to be processed in the first embodiment. In addition, FIG. 11 is a flowchart showing process flow of reducing polygons. FIG. 6 shows another example of the polygon reduction.

In the example shown in FIG. 5 (a) to (d), descriptions will be made using the two-dimensional coordinate value (X, Y) which is a part of the three dimensional position coordinate value (X, Y, Z), however, the process can be applied to the polygons represented in three-dimensional coordinate value (X, Y, Z). The same applies to other attribute data attached to the vertices, namely, color values (R, G, B), textured coordinate data (TX, TY), and normal line vectors (NX, NY, NZ) and others.

First, the polygon simplifying unit 160 takes one surface (polygon) out of the polygons to be processed (S401). In the example shown in FIG. 5, the polygon that has been taken out corresponds to the polygon V0V1V2V3V4V5 shown in (a) in FIG. 5.

Next, the polygon simplifying unit 160 determines a standard side in a polygon that has been taken out (S402). In the example shown in FIG. 5 (a), the polygon simplifying unit 160 has taken out the polygon V0V1V2V3V4V5, and the side V0V5 is the standard side.

The determined standard side is stored in the stack in the polygon simplifying unit 160 (S403). In the example shown in FIG. 5 (a), the side V0V5 is the standard side to be stored in the stack.

The polygon simplifying unit 160 then judges whether the stack is empty or not in the process loop (S404). When the judgment is performed first, the judgment result shows "No" since the standard side is stored in the stack.

More specifically, in the example shown in FIG. 5 (a), the result shows "No" since the side V0V5 is stored in the stack. The process of polygon simplification is terminated when the process proceeds and the judgment result in S404 shows "Yes".

When it is judged that the stack is not empty in the judging in S404 (No in S404), the polygon simplifying unit 160 takes out of a side (line segment) out of the stack (S405). In the example shown in FIG. 5 (a), the side V0V5 is the side.

The polygon simplifying unit 160 calculates the distance from the vertices between the side that has been taken out to the side taken out of the stack (S406). In the example shown in FIG. 5 (a), the vertices included in the side that has been taken out of the stack are the vertex V1, the vertex V2, the vertex V3, and the vertex V4, and the distances from each vertex to the side V0V5 are the lengths of the perpendiculars from each vertex (the vertices V1 to V2) to the side V0V5.

Next, the polygon simplifying unit 160 executes "side-vertex distance calculation" (S407). "Side-vertex distance calculation" refers to a process calculating the longest distance among the distances between the side that has been taken and each vertex. Furthermore, the polygon simplifying unit 160 specifies the vertex composing the longest distance (Vmax) among the calculated distances (S408). In the example shown in FIG. 5 (a), the vertex V3 is the vertex composing the longest distance, and the side V3H1 is the longest distance.

Next, the polygon simplifying unit 160 judges whether the distance between the vertex and the side composing the longest distance (V3H1 in the example in FIG. 5 (a)), is larger than the predetermined threshold (S409). "Predetermined threshold" is same as the threshold determined when judging whether given polygon data is simplified or not (the threshold in S203 in FIG. 10).

When the distance between the vertex and the side composing the longest distance is shorter than the predetermined threshold (No in S409), the vertices between the side are deleted (S411). When the distance between the vertex and the side composing the longest distance is longer than the predetermined threshold (Yes in S409), the line segment connecting both end points of the current standard side and the vertex with which the length to the standard side is to be the maximum is stored in the stack (S410). In the example shown in FIG. 5 (a), the distance V3H1 between the vertex and the side composing the longest distance is longer than the predetermined threshold (Yes in S409), the line segments V3V0 and V3V5 connecting both end points of the side V0V5 which is the current standard side and the vertex V3 with which the distance to the standard side V0V5 is to be the longest are stored in the stack (S410).

The process subsequently returns to the first process in the process loop (S404).

In the first process in the above process, the polygon to be simplified is the polygon V0V1V2V3V4V5 as shown in FIG. 5 (a), judgment for vertex reduction is performed assuming the starting point is the vertex V0 and the end point is the vertex V5 in this case. As a result, no vertex has been deleted in this process loop.

In the process after the second loop of the process loop described below, two polygons V0V1V2V3 (starting point is the vertex V0 and the end point is the vertex V3) and V3V4V5 (starting point is V3 and the end point is the V5) are to be simplified as shown in FIG. 5 (b), and judgment for vertex reduction is performed as described above.

It is judged whether the stack is empty or not, in the beginning of the second process loop as well (S404). In the example above, two line segments, namely the side V0V3 and the side V3V5 are stored in the stack, and thus the stack is not empty (No in S404) and the process proceeds.

Subsequently, one side (the side V0V3 in the example shown in FIG. 5 (c)) is taken out of the stack (S405), the distance to the side taken out of the vertices included in the side (side V0V3) taken out (vertices V1 and V2) is calculated (S407). The distance corresponds to V1H2 and V2H3 in the example shown in FIG. 5 (c).

The longest distance is taken out of the calculated distances (S408), and it is determined whether the maximum value is greater than the predetermined threshold or not (S409). In the example shown in FIG. 5 (c), it is judged that the two perpendiculars, the line segments V1H2 and V2H3 are not longer than the predetermined threshold (No in S409), and it is determined that the vertices V1 and V2 between the side (V0V3) are deleted (S411). The process subsequently returns to the first process in the process loop (S404).

It is judged whether the stack is empty or not, in the beginning of the third process loop as well (S404). In the example above, one line segment, namely, the side V3V5 is stored in the stack, and thus the stack is not empty (No in S404) and the process proceeds.

The one side left in the stack (the side V3V5 in the example shown in FIG. 5 (c)) is taken out (S405), and the distance from the vertex between the side (the vertex V4) to the side that has been taken out (the side V3V5) is calculated (S407). The distance corresponds to V4H4 in the example shown in FIG. 5 (c).

The longest distance is specified out of the calculated distances (S408), and it is judged whether the maximum value is greater than the predetermined threshold or not (S409). In the example shown in FIG. 5 (c), it is judged that the perpendicular, the line segment V4H4 is not longer than the predetermined threshold (No in S409), and thus it is determined that the vertex V4 between the side taken out (the side V3V5) is deleted (S411).

With the series of process described above, as shown in FIG. 5 (d), the vertices V1, V2 and V4 are deleted, and the original polygon V0V1V2V3V4V5 is simplified to the polygon V0V3V5.

The process returns to the beginning of the process loop again (S404). In the example above, no side (line segment) is left in the stack (Yes in S404), and thus the simplification process is terminated.

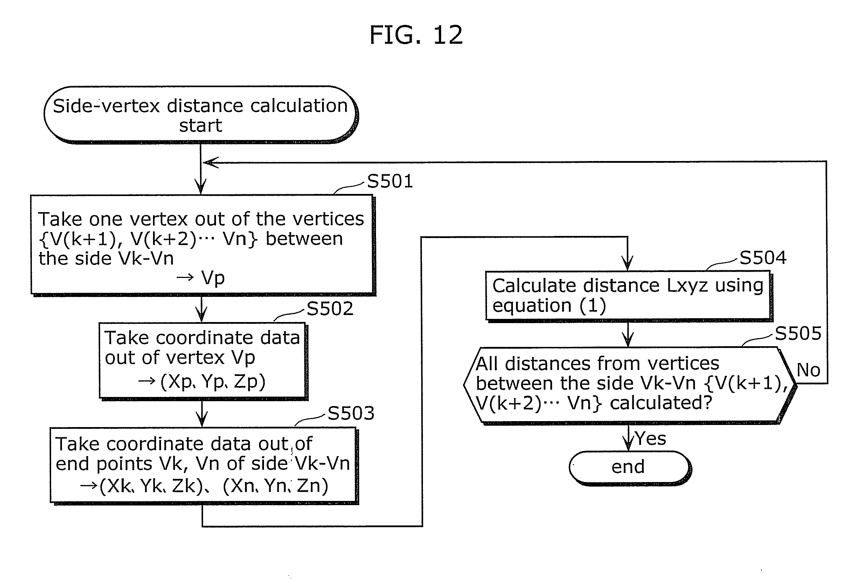

FIG. 12 is a flowchart showing the detail of "side-vertex distance calculation" in FIG. 11 when focusing on the coordinate value. Note that the following equation (1) is used in FIG. 12.

[Equation 1]

$$Lxyz = \frac{sqrt\{(Ykn*Zkp-Zkn*Ykp)**2+(Zkn*Xkp-Xkn*Zkp)**2+(Xkn*Ykp-Ykn*Xkp)**2\}}{sqrt\{Xkn**2+Ykn**2+Zkn**2\}} \quad (1)$$

Note that, in the equation (1), Lxyz denotes the length of perpendicular from any vertex Vp between the side Vk-Vn to the side Vk-Vn (more specifically, Euclidean distance from the vertex Vp to the side Vk-Vn). In addition, Xkp denotes the difference on the x-coordinate of the vertex Vk which is an end point of the side Vk-Vn and the vertex Vp (more specifically, Xkp=Xp-Xk). Ykp denotes the difference on y-coordinate of the vertex Vk and the vertex Vp (more specifically, Ykp=Yp-Yk), and Zkp denotes the difference on z-coordinate of the vertex Vk and the vertex Vp (more specifically, Zkp=Zp-Zk), likewise. Xkn denotes the difference on x-coordinate of the vertex Vk and the vertex Vn (more specifically, Xkn=Xn-Xk) (the same applies to Ykn and Zkn). In the equation (1), "sqrt" denotes a square root, "**" denotes exponentiation, and "*" denotes multiplication.

The following describes an embodiment where polygon simplification process is performed on the polygon shown in FIG. 6 in the same manner as shown in FIG. 5.

First, the polygon simplifying unit 160 takes one surface (polygon) out of the obtained polygon (S401). In the example shown in FIG. 6, the polygon that has been taken out corresponds to the polygon W0W1W2W3W4W5 shown in (a) in FIG. 6.

Next, the polygon simplifying unit 160 determines a standard side (W0W5) in the polygon W0W1W2W3W4W5 that has been taken out (S402). In the same manner as in FIG. 5, the polygon simplifying unit 160 determines the line segment connecting the starting point W0 and the end point W5 when drawing the polygon W0W1W2W3W4W5 as the standard side.

Furthermore, the polygon simplifying unit 160 stores the determined standard side W0W5 in the stack (S403).

The polygon simplifying unit 160 then enters the process loop, and judges whether the stack is empty or not (S404). Note that, in the first judgment, the judgment result shows "No" since the standard side is stored in the stack.

In the judging, when it is judged that the stack is not empty (No in S404); one side (line segment) is taken out of the stack (S405). In the example shown in FIG. 6 (a), the side W0W5 corresponds to the side.

Distances from the vertices included between the side W0W5 to the side are calculated (S407). In the example shown in FIG. 6 (a), the vertices included in the side W0W5 are the vertices W1, W2, W3 and W4, and the distances from each vertex to the side W0W5 are the lengths of perpendiculars drawn from each vertex (the vertices W1, W2, W3, and W4) to the side W0W5.

The polygon simplifying unit 160 then specifies the vertex from which the distance is to be the longest among the calculated distances (S408). In the example shown in FIG. 6 (a), the vertex W3 is the vertex composing the longest distance, and the side W3K1 is the longest distance.

Subsequently, it is judged that the distance from the vertex from which the distance is the longest to the side (W3K1) is larger than the predetermined threshold (S409).

When the distance from the vertex from which the distance is the longest to the side (W3K1) is not larger than the predetermined threshold (No in S409), the vertices between the side are deleted (S411). In the example shown in FIG. 6 (a), the distance (W3K1) between the vertex W3 and the side W0W5 composing the longest distance is longer than the predetermined threshold (Yes in S409), the line segments W3W0 and W3W5 connecting both end points of the side W0W5 which is the current standard side and the vertex W3 with which the distance to the standard side W0W5 is to be the longest are stored in the stack (S409).

The process subsequently returns to the beginning in the process loop (S404).

In the first process loop described above, judgment for vertex reduction is performed assuming that the polygon to be simplified is the polygon W0W1W2W3W4W5 and the starting point is the vertex W0, and the end point is the vertex W5 as shown in FIG. 6 (a). As a result, no vertex has been reduced in this process loop. Processes described above are the same as the example shown in FIG. 5.

In the process after the second loop of the process loop described below, two polygons W0W1W2W3 (starting point is the vertex W0 and the end point is the vertex W3) and W3W4W5 (starting point is W3 and the end point is the W5) are to be simplified as shown in FIG. 6 (b), and judgment for vertex reduction is performed as described above.

It is judged whether the stack is empty or not, in the beginning of the second process loop (S404). In the example above, two line segments, namely, the line segment W0W3 and the line segment W3W5 are stored in the stack, and thus the stack is not empty (No in S404), and the process proceeds.

One side (the side W0W3 in the example shown in FIG. 6(c)) is taken out of the stack (S405), and the distance from the vertices W1 and W2 between the side W0W3 to the side (W0W3) are calculated (S407). The distance corresponds to the line segment W1K2 and the line segment W2K3 in the example shown in FIG. 6(c).

The longest distance is specified out of the calculated distances (S408), and it is judged whether the maximum value is greater than the predetermined threshold or not (S409). In the example shown in FIG. 6 (c), the line segment W2K3 is the longest distance, and the distance is longer than the predetermined threshold (Yes in S409). Thus, two line segments connecting the vertex W2 and both end points of the current standard side W0W3 are stored in the stack (S409). More specifically, the line segments W0W2 and W2W3 are newly stored in the stack. The process returns to the beginning of the process loop again (S404).

It is judged whether the stack is empty or not, in the beginning of the third process loop as well (S404). In the example above, three line segments, namely, the line segment W0W2, the line segment W2W3 and the line segment W3W5 are stored in the stack, and thus the stack is not empty (No in S404), and the process proceeds.

Subsequently, the one side left in the stack is taken out (S405).

The side to be taken out varies in the embodiments; however, there is not much difference on the side to be taken out, and it is assumed that the line segment W3W5 has been taken out here.

The distance from the vertex W4 between the line segment W3W5 to the side W3W5 is calculated (S407). In the example shown in FIG. 6 (c), the distance is the line segment W4K4.

The longest distance is specified out of the calculated distances (S408), and it is judged whether the maximum value is greater than the predetermined threshold or not (S408). The perpendicular, which is the line segment W4K4 in the example shown in FIG. 6 (c) is not longer than the predetermined threshold (No in S409), and thus the vertex W4 between the line segment W3W5 is deleted (S411). The process subsequently returns to the beginning of the process loop (S404).

It is judged whether the stack is empty or not, in the beginning of the fourth process loop as well (S404). In the example above, two line segments, namely, the line segment W0W2 and the line segment W2W3 are stored in the stack. Thus the stack is not empty (No in S404), and the process proceeds.

Subsequently, the side left in the stack is taken out (S405).

In this embodiment, it is assumed that the line segment W0W2 has been taken out.

Subsequently, the distance from the vertex W1 between the line segment W0W2 and the line segment W0W2 is calculated (S406). The distance is not longer than the predetermined threshold (No in S408), and thus the vertex W1 between the line segment W0W2 is deleted (S411). The process returns to the beginning of the process loop again (S404).

It is judged whether the stack is empty or not, in the beginning of the fifth process loop as well (S404). In the example above, one line segment, namely, the side W2W3 is left in the stack, and thus the stack is not empty (No in S404), and the process proceeds.

Subsequently, the line segment W2W3 left in the stack is taken out (S405).

The following process is not performed since there is no vertex between the side, and the process returns to the beginning of the process loop again (S404).

The simplifying process (S411) is terminated since there is no more side in the stack at this stage (Yes in S404).

With the series of process described above, as shown in FIG. 6 (d), the vertices W1 and W4 are deleted, and the original polygon W0W1W2W3W4W5 is simplified to the polygon W0W2W3W5.

As described above, in the first embodiment above, polygons can be simplified after judging or assessing whether the acceleration as a whole process is achieved or not to one polygon composing the given polygons. In addition, drawing process such as shading to the simplified polygon enables faster drawing of the three-dimensional object using the polygon approximation in a device without necessarily high computational capability, as well as display of moving images without causing uncomfortable feeling to the viewer.

The embodiment described above simplifies polygons focusing on the two-dimensional or three-dimensional coordinates of polygons; however, polygons may be simplified focusing on the light's three primary colors (Red, Green, and Blue). When vertices are reduced based on only the position coordinates of the vertex of the polygon, one of adjacent vertices that are different in color, for example, black and white is deleted, leading to a drastic change in appearance. Thus, when there is a drastic change in polygon in color, evaluation using colors are added to the evaluation using position coordinate of vertices in order to simplify polygons without visually causing uncomfortable feeling.

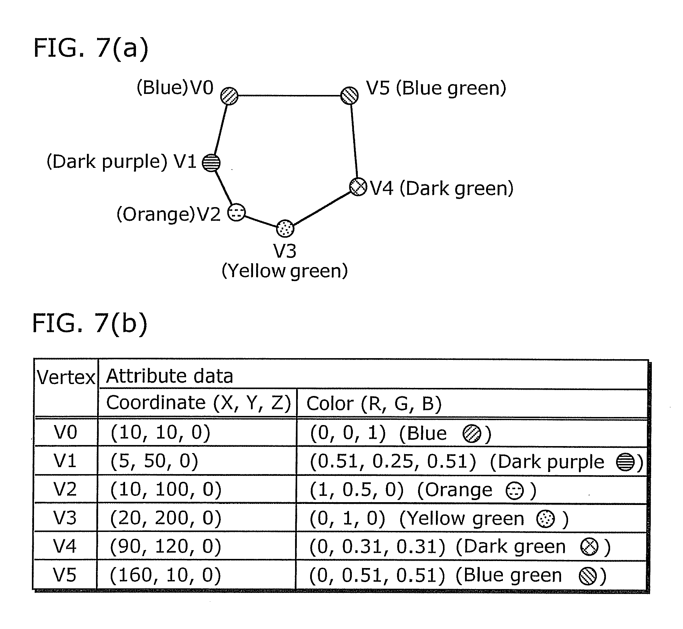

The following is a description of an embodiment where polygons are simplified focusing on the three primary colors when displaying the polygons referring to FIGS. 7 to 9, 11 and 13. Same reference numerals are applied to the content same as the embodiment described above for simplifying polygons focusing on the two-dimensional or three-dimensional coordinates of polygons, and the description thereof is omitted.

FIG. 7 (a) shows an example of a polygon inputted via the drawing information obtaining unit 110. The polygon shown in FIG. 7 (a) is a hexagon, and colors are assigned to each vertex (vertices V0 to V5). FIG. 7 (b) is a chart showing detailed attributes of the polygon shown in FIG. 7 (a), where coordinates (x, y, z) and color value (R, G, B) of each vertex are defined.

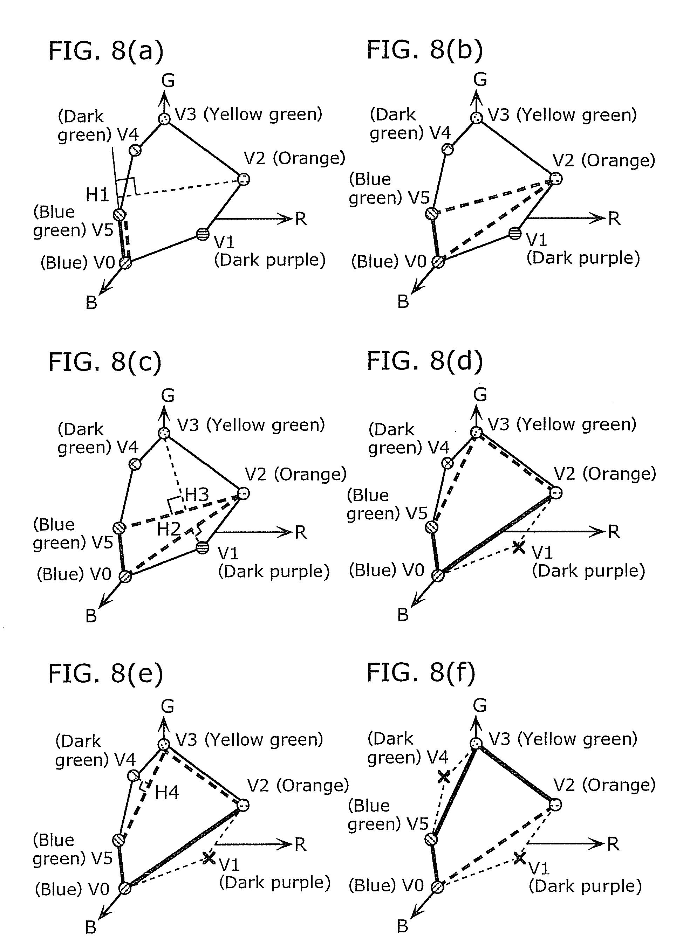

FIG. 8 (a) to (f) describes process of simplifying the polygon shown in FIG. 7 (a) while focusing on the colors of each vertex in the same manner as the polygon simplification focusing on the two-dimensional or three-dimensional coordinates of the polygon (note that the shape of polygon in FIG. 8 (a) to (f) appears differently from the shape of polygon shown in FIG. 7 (a) since the arrangement of vertices are adjusted more to the actual color space).

First, as shown in FIG. 8 (a), it is judged whether vertices V1 to V4 can be deleted as the side V0V5 being the standard side. In the example in FIG. 8 (a), since the line segment V2H1 is longer than the threshold, vertices V1 to V4 are not deleted.

Next, FIG. 8 (b) shows that the line segments V0V2 and V2V5 are specified as the standard sides.

Furthermore, as shown in FIG. 8 (c), it is judged whether the vertex V1 when the standard side is the side V0V2 can be deleted or not, and whether the vertices V3 and V4 can be deleted when the standard side is the side V2V5. The judgment result in FIG. 8 (c) indicates, as shown in FIG. 8 (d), the vertex V1 can be deleted since the line segment V1H2 is shorter than the threshold, and thus the vertex V1 can be deleted. On the other hand, the line segment V3H3 is longer than the threshold, and thus the vertices V3 and V4 are not deleted.

The subsequent judgment in the same manner indicates that the vertex V4 can be deleted when the standard side is the line segment V3V5 since the line segment V4H4 is shorter than the threshold as shown in FIG. 8 (e).

As described above, when focusing on the color value of each vertex in the polygon shown in FIG. 7 (a), it is judged that the vertices V1 and V4 can be deleted.

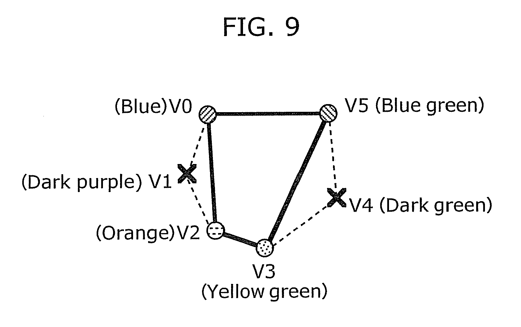

Deleting only the common vertices (vertices V1 and V4) in the vertices specified when the simplification is performed focusing on the color value of each vertex (vertices V1 and V4) and the vertices specified when the simplification is performed focusing on two-dimensional or three-dimensional coordinates of polygon (vertices V1, V1, and V4) enables simplification taking, not only the position coordinate of vertices with respect to the polygon shown in FIG. 7 (a), but also evaluation based on color into consideration. FIG. 9 shows the polygon after simplification.

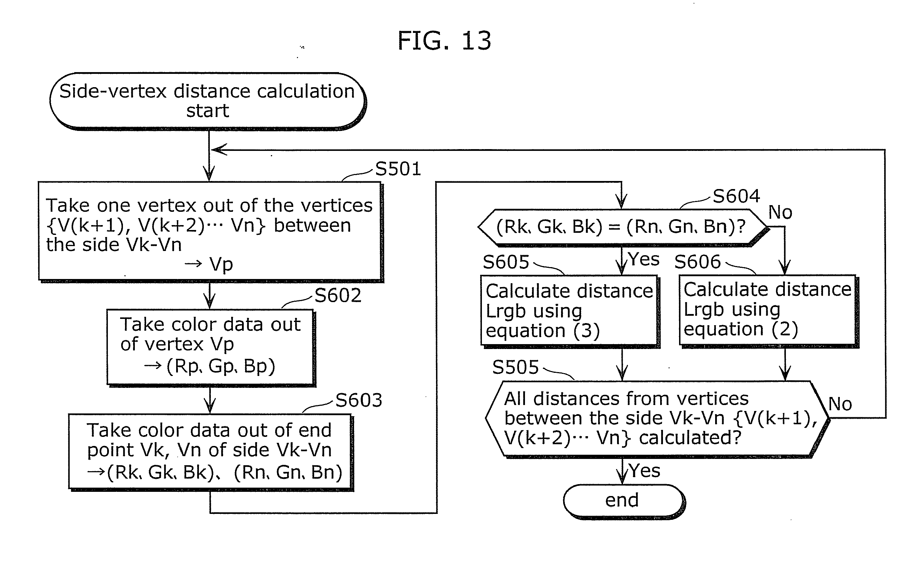

FIG. 13 is a flowchart showing the detail of "side-vertex distance calculation" in FIG. 11 when focusing on the color value.

The process is same except the process for take the color data (Rp, Gp, Bp) out of the vertex Vp (S602) and the distance Lrgb is calculated based on the color data taken out of the end points Vk and Vn. Note that the following equations (2) and (3) are used in FIG. 13.

[Equation 2]

$$Lrgb = \frac{sqrt\{(Gkn * Bkp - Bkn * Gkp) ** 2 + (Bkn * Rkp - Rkn * Bkp) ** 2 + (Rkn * Gkp - Gkn * Rkp) ** 2\}}{sqrt\{Rkn ** 2 + Gkn ** 2 + Bkn ** 2\}} \quad (2)$$

In the above equation (2), Lrgb denotes the distance in color from the color of any vertex Vp between the side Vk-Vn to an average color in the side Vk-Vn. Rkp denotes the difference of the intensity of red on the vertex Vk which is the end point of the side Vk-Vn and red on the vertex Vp (more specifically, Rkp=Rp-Rk). Likewise, Gkp denotes the difference of the intensity of green on the vertex Vk which is the end point of the side Vk-Vn and green on the vertex Vp (more specifically, Gkp=Gp-Gk), and Bkp denotes the different of the intensity of blue on the vertex Vk which is the end point of the side Vk-Vn and blue on the vertex Vp (more specifically, Bkp=Bp-Bk) Similarly, Rkn denotes the difference of the intensity of red on the vertex Vk and red on the vertex Vn (more specifically, Xkn=Xn-Xk) (the same applies to Gkn and Bkn). In the equation (2), "sqrt" denotes a square root, "**" denotes an exponentiation, and "*" denotes a multiplication.

[Equation 3]

$$Lrgb = sqrt\{Rkp ** 2 + Gkp ** 2 + Bkp ** 2\} \quad (3)$$

Note that in the equation (3), Lrgb denotes the distance in color between the vertex Vk and the vertex Vp. Here, unlike the case of three-dimensional coordinate system, the same value may be assigned to different vertices when the color data is used. In this case, the color of the vertex Vk (or Vn) and average color of the side Vk-Vn is same, and thus the equation like (3) is used. Note that identical result is obtained when calculating the distance between the vertices Vp, instead of Vk, and Vn is calculated or when the distance in color on the vertex Vp and the average color of the side Vk-Vn is calculated using the equation (2). Therefore, equation for calculating distance may be used instead of the equation (3).

As described above, according to the drawing device of the first embodiment, even when focusing on the color value of each vertex in polygon, it is possible to judge possibility of deletion of each vertex using the same method focusing on the two-dimensional or three-dimensional coordinate value of polygon.

The embodiment described above includes examples which simplify polygons focusing on the two-dimensional or three-dimensional coordinates of polygons, or focusing on the combination of two-dimensional or three-dimensional coordinates of polygons and color values; however, evaluating possibility of polygons may be performed in combination with factors other than the location of vertex and colors, for example, normal vectors and texture coordinates. In addition, the possibility of simplifying polygons may be evaluated focusing color, normal vector, or texture coordinate only.

(Second embodiment)

In the first embodiment, the embodiment in which the polygon obtained by the drawing information obtaining unit 110 is defined as the "FAN-type" is described. In the second embodiment, an embodiment in which the polygon defined as the "STRIP-type" undergoes polygon simplification process after the polygon defined as "STRIP-type" is converted to the "FAN-type" is described.

The drawing device according to the present invention is characterized in that the drawing information obtaining unit 110 in the drawing device 100 according to the first embodiment is capable of converting the polygon defined as the STRIP-type into the FAN-type. Other functions are the same as the drawing device 100 according to the first embodiment.

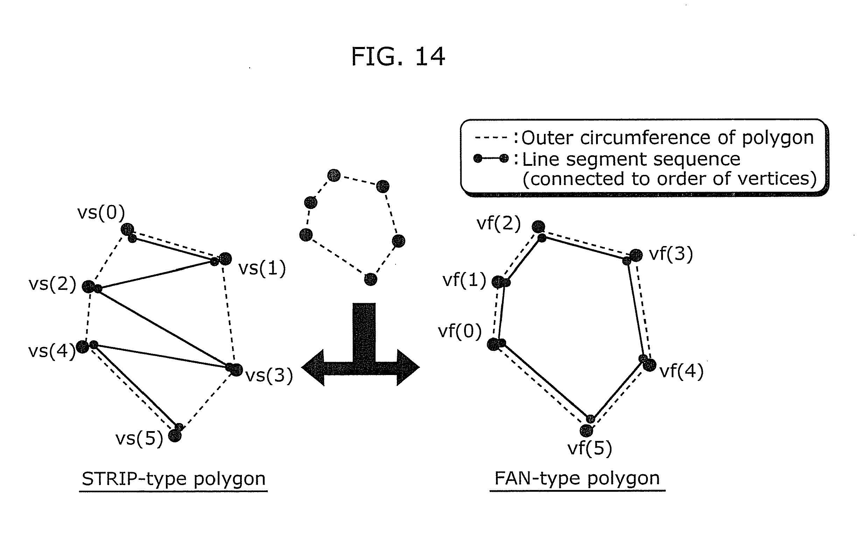

FIG. 14 is a figure showing two forms of polygons when defining a polygon (hexagon in FIG. 14). As shown in FIG. 14, the polygon defined as the STRIP-type (STRIP-type polygon) is defined in a top-down zigzag form (for example, along with the y-coordinate of each vertex), and the polygon defined as the FAN-type (FAN-type polygon) is defined in a clockwise closed loop. The STRIP-type polygon and the FAN-type polygon are interchangeable since the coordinate of each vertex is same when defined as the STRIP-type and when defined as the FAN-type.

The following is the reasons for converting the polygon defined as the "STRIP-type" to the "FAN-type". The algorithm used for reducing the vertices of polygon in the first embodiment has a characteristic that maintains the shape of line segment sequence as much as possible. However, since in the polygon defined as the STRIP-type, the shape of the line segment sequence and the outer circumference do not match. Thus, forcible application of the algorithm may cause unnatural conversion. For that reason, only FAN-type polygons are processed in the first embodiment; however, this limits the type of polygon to be processed, and it is not possible to perform full simplification. In the second embodiment, the conversion is performed in order to solve the disadvantage.

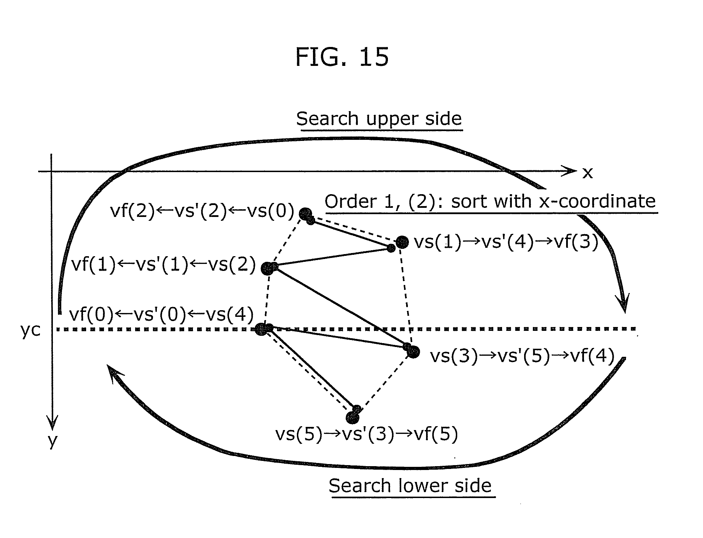

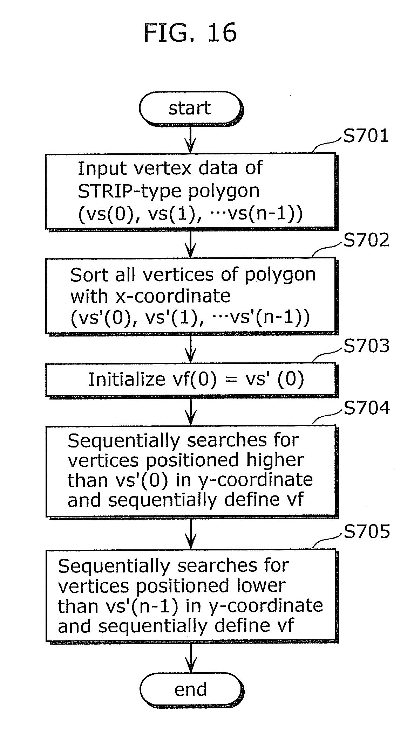

The order for converting the STRIP-type polygon into FAN-type polygon in the drawing information obtaining unit according to the second embodiment is described referring to FIGS. 15 and 16.

FIG. 15 is a figure showing the order for converting the STRIP-type polygon to the FAN-type polygon. FIG. 16 is a flowchart showing the process flow in the drawing information obtaining unit according to the second embodiment.

First, the drawing information obtaining unit sorts all vertices of polygon with x-coordinate (S702) when vertex data of the polygon defined as the STRIP-type is inputted (S701). In the second embodiment, sorted vertices are denoted as vs' (0), vs' (1)... vs' (n-1). Note that n is the number of all vertices in the polygon.

The drawing information obtaining unit 110 defines "vf (0) = vs' (0)" as initializing process (S703). Here, vf indicates the vertices after converted to the FAN-type, and are denoted as vf (0), vf (1)... vf (n-1).

The drawing information obtaining unit further searches for vertices positioned higher than the vs' (0) in y-coordinate sequentially (searches upper side), and sequentially defines vertices after vf (1) (S704). More specifically, the vertices positioned higher in y-coordinate is searched so that the x-coordinates are to be in ascending order will sort the vertices clockwise (the vertices sorted in the order of x-coordinate is defined such as vs' for the search here).

The drawing information obtaining unit further searches for vertices positioned lower than the vs' (n-1) in y-coordinate sequentially (searches lower side), and sequentially defines vertices vf undefined when process in S704 is finished (S705). More specifically, the vertices positioned lower in y-coordinate is searched so that the x-coordinates are to be in descending order will sort the vertices clockwise.

Defining vertex vf in this order enables conversion of sequence of the polygon data defined as the STRIP-type into a clockwise sequence. This converts the polygon data into the polygon data defined as the FAN-type.

As described above, the drawing device and others according to the second embodiment converts the polygon data defined as the STRIP-type into the polygon data defined as the FAN-type, and thus, the drawing device can flexibly adjust to the format of inputted polygon data.

(Variation)

In FIGS. 12 and 13, computation formulas using the Euclidian distance are used (formulas (1) to (3)); computation formulas using 8-neighbor distance may be applied (see the following formulas (4) to (6)).
[Equation 4]

$$Lxyz8 = \frac{max\{abs(Ykn*Zkp-Zkn*Ykp),abs(Zkn*Xkp-Xkn*Zkp),abs(Xkn*Ykp-Ykn*Xkp)\}}{max\{abs(Xkp),abs(Ykp),abs(Zkp)\}} \quad (4)$$

[Equation 5]

$$Lrgb8 = \frac{max\{abs(Gkn*Bkp-Bkn*Gkp),abs(Bkn*Rkp-Rkn*Bkp),abs(Rkn*Gkp-Gkn*Rkp)\}}{max\{abs(Rkp),abs(Gkp),abs(Bkp)\}} \quad (5)$$

[Equation 6]

$$Lrgb8 = max\{abs(Rkp),abs(Gkp),abs(Bkp)\} \quad (6)$$

Furthermore, computation formulas using the 4-neighbor distance may be applied (see the following formulas (7) to (9)).
[Equation 7]

$$Lxyz4 = \frac{abs(Ykn*Zkp-Zkn*Ykp)+abs(Zkn*Xkp-Xkn*Zkp)+abs(Xkn*Ykp-Ykn*Xkp)}{abs(Xkp)+abs(Ykp)+abs(Zkp)} \quad (7)$$

[Equation 8]

$$Lrgb4 = \frac{abs(Gkn*Bkp-Bkn*Gkp)+abs(Bkn*Rkp-Rkn*Bkp)+abs(Rkn*Gkp-Gkn*Rkp)}{abs(Rkp)+abs(Gkp)+abs(Bkp)} \quad (8)$$

[Equation 9]

$$Lrgb4 = abs(Rkp) + abs(Gkp) + abs(Bkp) \qquad (9)$$

More specifically, the formula (4) or the formula (7) may be used instead of the formula (1). In addition, the formula (5) or the formula (8) may be used instead of the formula (2). Furthermore, the formula (6) or the formula (9) may be used instead of the formula (3).

In addition, as described above, although normalization, measuring the distance and reduction of vertices of polygon are performed on the same coordinate system in the first and second embodiments, separate coordinate system may be used (for example, normalizing the distance measured in the three-dimensional coordinate with the size of color coordinate space) in the first embodiment or the second embodiment.

Note that, although the present invention has been described based on the embodiments, it is needless to say that the present invention is not limited to the embodiments. The following cases are also included in the present invention.

(1) Each device described above is, specifically, a computer system configured of a microprocessor, a ROM, a RAM, a hard disk unit, a display unit, a keyboard, a mouse and others. A computer program is stored in the RAM or the hard disk unit. Each device achieves its function with the operation according to the computer program. Here, the computer program is configured of multiple command codes indicating commands to a computer for achieving a predetermined function.

(2) A part of or all of the components configuring each device may be composed of a system Large Scale Integration (LSI). A system LSI is a super-multi function LSI manufactured by integrating multiple components into one chip, and is specifically a computer system configured including a microprocessor, a ROM, a RAM, and others. A computer program is stored in the RAM. The system LSI achieves its function with the operation of the microprocessor according to the computer program.

Each unit of the component configuring each device may be individually integrated into one chip, or integrated into one chip so that a part of, or all of the units are included.

Furthermore, although the example described a system LSI, however, it may be referred to as an IC, an LSI, a super LSI, or an ultra LSI depending on the difference in the degree of integration. Furthermore, the integration may be achieved, not only as LSI, but also as a dedicated circuit or a universal processor. Field Programmable Gate Array (FPGA) and reconfigurable processor that can reconfigure the connection and setting of the circuit sell inside the LSI may be used after the LSI is manufactured.

Furthermore, when integration circuit technology replacing LSI emerges with the advancement of semiconductor technology or derivative technology, the technology may be used naturally for integrating functional block. Possibility includes application of biotechnology.

(3) A part of or all of components configuring each device may be configured of an IC card detachable to each apparatus or a single module. The IC card or the module is a computer system configured of a microprocessor, a ROM, and a RAM. The IC card and the module may include the super-multi function LSI. The IC card or the module achieves its function with the operation of the microprocessor according to the computer program. The IC card or the module may be tampering resistant.

(4) The present invention may be the method described above. Alternatively, the present invention may be a computer program for executing the method on a computer, or may be digital signals composing the computer program.

Furthermore, the present invention may be a computer-readable recording medium such as a flexible disk, a hard disk, a CD-ROM, an MO, a DVD, a DVD-ROM, a DVD-RAM, a Blu-ray Disc (BD) on which the computer program or the digital signal are recorded. Furthermore, the present invention may be the digital signal recorded on the recording medium.

In addition, in the present invention, the computer program or the digital signals may be transmitted via the electric communication line, wireless or wired communication line, networks such as the Internet, and data broadcasting and others.

In addition, the present invention is a computer system including a microprocessor and a memory. The memory may store the computer program, and the microprocessor may operate according to the computer program.

In addition, the present invention may be implemented in another independent computer system by transferring the digital signals to the recording medium, or by transferring the program or the digital signals via the network.

(5) The embodiments and the variation may be combined respectively.

**EP 2 015 256 A1**

**Industrial Applicability**

The present invention is useful for devices that are not necessarily high in processing capacity, such as mobile phones, Personal Digital Assistants (PDA) or gaming machines that display computer graphics, and its industrial applicability is extremely high.

**Claims**

1. A drawing device comprising:

a standard information obtaining unit configured to obtain standard information including a type of drawing process that could be used for computer graphics and a feature of the shape of polygon;
a drawing information obtaining unit configured to obtain drawing information including information indicating the type of drawing process used for the actual computer graphics and information indicating the shape of polygon;
a simplification judging unit configured to judge whether the type of the drawing process and the shape of the polygon indicated by the drawing information satisfy the standard indicated by the standard information;
a polygon simplifying unit configured to simplify the polygon by reducing vertices composing the polygon when said simplification judging unit judges that the standard is satisfied; and
a drawing unit configured to execute computer graphics process using the polygon whose vertices are reduced.

2. The drawing device according to Claim 1,
wherein the content of drawing process that could be used for computer graphics includes at least one of assigning color to vertex, lighting, hidden surface removal, alpha blending, and texture mapping.

3. The drawing device according to Claim 1,
wherein the standard information includes a condition that the length of perpendicular from one of the vertices composing the polygon to a line segment connecting other two vertices of the polygon is shorter than a predetermined threshold.

4. The drawing device according to Claim 3,
wherein each of the vertices composing the polygon includes at least one of position coordinate data, color data, texture coordinate data, and normal line vector data as attribute data, and
said polygon simplifying unit is configured to calculate a maximum value of the distance to the line segment that has been taken out with respect to all attribute data that is included and to delete a vertex between the line segment that has been taken out when the calculated maximum value is not larger than the predetermined threshold regarding all attribute data.

5. The drawing device according to Claim 1,
wherein said drawing information obtaining unit is configured to obtain a polygon defined as a FAN-type,
said simplification judging unit is configured to perform the judging on the polygon defined as the FAN-type,
said polygon simplifying unit is configured to perform the simplification on the polygon defined as the FAN-type, and
said drawing unit is configured to execute computer graphics process using the polygon defined as the FAN-type.

6. The drawing device according to Claim 5,
wherein said drawing information obtaining unit is configured to convert, when receiving a polygon defined as a STRIP-type the polygon defined as the STRIP-type to a polygon defined as FAN-type.

7. A drawing method comprising:

obtaining standard information including a type of drawing process that could be used for computer graphics and a feature of the shape of polygon;
obtaining drawing information including information indicating the type of drawing process used for the actual computer graphics and information indicating the shape of polygon;
judging whether the type of the drawing process and the shape of the polygon indicated by the drawing information satisfy the standard indicated by the standard information;
simplifying the polygon by reducing vertices composing the polygon when said judging judges that the standard is satisfied; and
executing computer graphics process using the polygon whose vertices are reduced.

8. The drawing method according to Claim 7,
wherein said simplifying includes:

(1) extracting vertices composing one surface from given polygon data;
(2) storing, in a memory, line segments connecting a starting point and a end point of the vertices composing the one surface;
(3) judging whether there is a segment stored in the memory and takes one line segment when it is judged that the line segment is stored in the memory;
(4) calculating a maximum value of distances from the respective vertices between the line segment that has been taken out to the line segment that has been taken out;
(5) deleting each vertex between the line segment that has been taken out when the maximum value is not larger than the predetermined threshold;
(6) storing, in the memory, two line segments connecting a vertex having a maximum distance and both of end points of the line segment that has been taken out, and
(7) repeating the process from (3) to (6) until no line segment is stored in the memory.

9. A computer program used for a drawing device, said computer program causing a computer to execute:

obtaining standard information including a type of drawing process that could be used for computer graphics and a feature of the shape of polygon;
obtaining drawing information including information indicating the type of drawing process used for the actual computer graphics and information indicating the shape of polygon;
judging whether the type of the drawing process and the shape of the polygon indicated by the drawing information satisfy the standard indicated by the standard information;
simplifying the polygon by reducing vertices composing the polygon when said judging judges that the standard is satisfied; and
executing computer graphics process using the polygon whose vertices are reduced.

10. A computer-readable recording medium encoded with a computer program used for a drawing device, said computer program causing a computer to execute:

obtaining standard information including a type of drawing process that could be used for computer graphics and a feature of the shape of polygon;
obtaining drawing information including information indicating the type of drawing process used for the actual computer graphics and information indicating the shape of polygon;
judging whether the type of the drawing process and the shape of the polygon indicated by the drawing information satisfy the standard indicated by the standard information;
simplifying the polygon by reducing vertices composing the polygon when said judging judges that the standard is satisfied; and
executing computer graphics process using the polygon whose vertices are reduced.

11. An integrated circuit comprising:

a standard information obtaining unit configured to obtain standard information including a type of drawing process that could be used for computer graphics and a feature of the shape of polygon;
a drawing information obtaining unit configured to obtain drawing information including information indicating the type of drawing process used for the actual computer graphics and information indicating the shape of polygon;
a simplification judging unit configured to judge whether the type of the drawing process and the shape of the polygon indicated by the drawing information satisfy the standard indicated by the standard information;
a polygon simplifying unit configured to simplify the polygon by reducing vertices composing the polygon when said simplification judging unit judges that the standard is satisfied; and
a drawing unit configured to execute computer graphics process using the polygon whose vertices are reduced.

# FIG. 1

| Polygon reducing unit |
| --- |

↓

| Vertex position calculation unit |
| --- |

↓

| Polyhedron developed view generating unit |
| --- |

↓

| Pixel value interpolation unit |
| --- |

# FIG. 2

100

Drawing device

104 ROM

103 RAM

102 Control unit

108 Internal bus

107 Communication unit

106 Operating unit

105 Display unit

EP 2 015 256 A1

18

FIG. 3

EP 2 015 256 A1

## FIG. 4

<div align="right">170</div>

| Type of drawing process | | | | | Normalized threshold | Normalized initial line segment length |
|---|---|---|---|---|---|---|
| Assigning color to vertex | Lighting | Alpha blending | Hidden surface removal | Texture mapping | | |
| No | No | No | Yes | No | $\geqq 0.06$ | $\geqq 0.62$ |
| No | No | Yes | No | No | $\geqq 0.06$ | $\geqq 0.39$ |
| No | No | Yes | Yes | No | $\geqq 0.05$ | $\geqq 0.37$ |
| Yes | No | Yes | No | No | $\geqq 0.08$ | $\geqq 0.37$ |
| Yes | No | Yes | Yes | No | $\geqq 0.06$ | $\geqq 0.28$ |

EP 2 015 256 A1

FIG. 5(a)

FIG. 5(b)

FIG. 5(c)

FIG. 5(d)

EP 2 015 256 A1

FIG. 6(a)

FIG. 6(b)

FIG. 6(c)

FIG. 6(d)

## FIG. 7(a)

(Blue)V0     V5 (Blue green)

(Dark purple) V1

(Orange)V2     V4 (Dark green)

V3
(Yellow green)

## FIG. 7(b)

| Vertex | Attribute data | |
|---|---|---|
| | Coordinate (X, Y, Z) | Color (R, G, B) |
| V0 | (10, 10, 0) | (0, 0, 1) (Blue ⊘) |
| V1 | (5, 50, 0) | (0.51, 0.25, 0.51) (Dark purple ⊜) |
| V2 | (10, 100, 0) | (1, 0.5, 0) (Orange ☺) |
| V3 | (20, 200, 0) | (0, 1, 0) (Yellow green ⊛) |
| V4 | (90, 120, 0) | (0, 0.31, 0.31) (Dark green ⊗) |
| V5 | (160, 10, 0) | (0, 0.51, 0.51) (Blue green ⊘) |

FIG. 8(a)

FIG. 8(b)

FIG. 8(c)

FIG. 8(d)

FIG. 8(e)

FIG. 8(f)

FIG. 9

(Blue)V0
V5 (Blue green)
(Dark purple) V1
V4 (Dark green)
(Orange)V2
V3
(Yellow green)

# FIG. 10

start

Determine type of drawing (assigning color to vertex, lighting, alpha blending, hidden surface removal and texture mapping) — S201

Determine the size of space where attribute data that each vertex has belongs to (maximum possible space) — S202

Determine simplifying threshold for each attribute data based on the size of space — S203

Calculate the length of initial line segment composing polygon to be processed for each attribute data — S204

Normalize threshold and initial line segment length by the size of space — S205

Judge availability of polygon simplification based on simplification standard table — S206

Yes → Simplify polygons — S207

No

Polygons are not simplified — S208

end

## FIG. 11

```
                    start
                      |
                      v
            +------------------+  S401
            | Take one surface |
            | (polygon) out of |
            | polygons (V0 to VN)|
            +------------------+
                      |
                      v
            +------------------+  S402
            | Determine one    |
            | standard side in |
            | polygon (V0 to VN)|
            +------------------+
                      |
                      v
            +------------------+  S403
            | Stored standard  |
            | side in stack    |
            +------------------+
                      |
                      v
            < Is stack empty? >  S404   No
                      |
                     Yes
                      v
                    end
```

```
            +------------------+  S405
            | Take one side    |
            | Vk-Vn out of stack|
            +------------------+
                      |
                      v
            < Is there vertex between >  S406
            < side Vk and Vn?        >   No
                      |
                     Yes
                      v
            +------------------+  S407
            | Side-vertex      |
            | distance calculation|
            +------------------+
                      |
                      v
            +--------------------------+  S408
            | Take out vertex having maximum|
            | calculated length (Vmax)  |
            +--------------------------+
                      |
                      v
            < Is distance between side  >  S409  No
            < Vk-Vn and vertex Vmax     >
            < larger than predetermined >
            < threshold?                >
                      |
                     Yes   S410
                      v
            +------------------+       +--------------------+  S411
            | Store two line   |       | Delete vertices {V(k+1),|
            | segments Vk-Vmax |       | V(k+2)... V(n)} between the|
            | and Vmax-Vn in stack|    | side               |
            +------------------+       +--------------------+
```

# FIG. 12

Side-vertex distance calculation start

Take one vertex out of the vertices {V(k+1), V(k+2)··· Vn} between the side Vk-Vn
→ Vp
S501

Take coordinate data out of vertex Vp
→ (Xp, Yp, Zp)
S502

Take coordinate data out of end points Vk, Vn of side Vk-Vn
→(Xk, Yk, Zk), (Xn, Yn, Zn)
S503

Calculate distance Lxyz using equation (1)
S504

All distances from vertices between the side Vk-Vn {V(k+1), V(k+2)··· Vn} calculated?
S505
No

Yes

end

## FIG. 13

Side-vertex distance calculation start

↓

**S501** — Take one vertex out of the vertices {V(k+1), V(k+2)··· Vn} between the side Vk-Vn
→ Vp

↓

**S602** — Take color data out of vertex Vp
→ (Rp, Gp, Bp)

↓

**S603** — Take color data out of end point Vk, Vn of side Vk-Vn
→(Rk, Gk, Bk), (Rn, Gn, Bn)

↓

**S604** — (Rk, Gk, Bk) = (Rn, Gn, Bn)?

No → **S606** — Calculate distance Lrgb using equation (2)

Yes → **S605** — Calculate distance Lrgb using equation (3)

↓

**S505** — All distances from vertices between the side Vk-Vn {V(k+1), V(k+2)··· Vn} calculated?

No → (loop back)

Yes → end

EP 2 015 256 A1

## FIG. 14

----:Outer circumference of polygon
●—●:Line segment sequence (connected to order of vertices)

STRIP-type polygon

vs(0)
vs(1)
vs(2)
vs(3)
vs(4)
vs(5)

FAN-type polygon

vf(0)
vf(1)
vf(2)
vf(3)
vf(4)
vf(5)

EP 2 015 256 A1

## FIG. 15

EP 2 015 256 A1

# FIG. 16

start

S701

Input vertex data of
STRIP-type polygon
(vs(0), vs(1), ···vs(n-1))

S702

Sort all vertices of polygon
with x-coordinate
(vs'(0), vs'(1), ···vs'(n-1))

S703

Initialize vf(0) = vs' (0)

S704

Sequentially searches for
vertices positioned higher
than vs'(0) in y-coordinate
and sequentially define vf

S705

Sequentially searches for
vertices positioned lower
than vs'(n-1) in y-coordinate
and sequentially define vf

end

## INTERNATIONAL SEARCH REPORT

| | International application No. |
|---|---|
| | PCT/JP2007/058839 |

**A. CLASSIFICATION OF SUBJECT MATTER**
*G06T15/00*(2006.01)i

According to International Patent Classification (IPC) or to both national classification and IPC

**B. FIELDS SEARCHED**

Minimum documentation searched (classification system followed by classification symbols)
G06T15/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2000-132711 A (Matsushita Electric<br>Industrial Co., Ltd.),<br>12 May, 2000 (12.05.00),<br>Par. Nos. [0036] to [0038], [0046]<br>(Family: none) | 1,2,7,9-11<br>5,6<br>3,4,8 |
| Y | Masanori KAKIMOTO et al., "OpenGL Optimizer<br>CAD no Daikibo 3-Jigen Model o Realtime<br>ni Hyoji", Nikkei computer graphics, Vol.131,<br>08 August, 1997 (08.08.97), pages 172 to 181,<br>page 177, left column, lines 7 to 16 | 5,6 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 07 June, 2007 (07.06.07) | 19 June, 2007 (19.06.07) |

| Name and mailing address of the ISA/<br>Japanese Patent Office | Authorized officer |
|---|---|
| Facsimile No. | Telephone No. |

Form PCT/ISA/210 (second sheet) (April 2005)

**EP 2 015 256 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7160898 A